# EUROPEAN PATENT APPLICATION

(11) **EP 2 781 705 A1**
(43) Date of publication of application: **24.09.2014**
(21) Application number: 14151502.3
(22) Date of filing: 16.01.2014
(51) Int. Cl.: F01M 11/03

(54) **Connection collar suitable for filters used in vehicles**

(30) Priority: 21.03.2013 TR 201303449
(71) Applicant: Asas Filtre Sanayi Ve Ticaret Anonim Sirketi, Iskenderun, Hatay (TR)
(72) Inventor: Göcmen, Zeker Ya, Hatay (TR)
(74) Representative: Iskender, Ibrahim

(57) **Abstract**

The present invention, in order to ensure the filters used in vehicles to be utilized independently from the shape/form thereof, to eliminate the requirement of using differentiated housings, relates to a connection collar (1) positioned between the housing and filter and mounted with close fit on said filters by means of at least one rib (100) and groove (101) comprised therein.

## Description

### Technical Field

The present invention relates to a connection collar used for mounting-dismounting the respective filters used in the oil/fuel equipment of the internal combustion engines to the system being provided therewith.

The present invention, in particular, relates to a connection collar providing compatibility between housings and filters by being mounted on the filters in order to provide the utilization of different type of filters with different shapes and forms for each vehicle independently from the shape/form thereof and thus eliminating the requirement of utilization of differentiated housings for the filters with similar filtering features.

### Prior Art

In vehicles numerous different types of filters are used. Said filters enable the fluid to attain desired purity levels by being positioned at appropriate locations in the oil/fuel systems.

In the prior art, filter housings produced by different manufacturers with different types and features for each vehicle are available. This situation brings along various technical problems. For each different filter housing, the necessity of selecting the filter suitable for said housing arises.

In the current state of the art, if a filter that is not suitable for the respective filter housing is selected, the situation of incomplete securing of the filter on the housing arises. When the filter is not completely secured on the housing, the situation of swinging and shaking of the filter on the housing will arise.

Lack of securing a filter on the filter housing, shaking of the filter due to the vibration created by the engine will lead to the leakage of the filter. This situation causes a very significant damage on the vehicle's fuel and oil system.

In the current applications, different types of filters with different shapes and forms are used for each vehicle. Said filters having an insert structure with different shapes and forms leads to the necessity of using differentiated housings. This situation, in turn, causes the costs to increase and negatively affects the user's budget.

In conclusion, an improvement in the relevant art by means of systems providing compatibility of the filters disposed in the internal combustion engines with all types of vehicles independently from the different shapes and forms thereof rendered necessary due to the aforementioned drawbacks and the insufficiency of the existing solutions in the field.

### Brief Description of the Invention

The present invention relates to a connection collar suitable for all types of filters used in the vehicles, which meets the aforementioned requirements, eliminates all the drawbacks and brings additional advantages.

The primary object of the present invention is to provide a connection collar positioned between the housing and filter in order to ensure compatibility of the filters having similar filtering features with the respective vehicles.

An object of the present invention is to provide utilization of different types of filters with different shapes and forms in the vehicles independently from the shape/form thereof.

A similar object of the present invention is to provide a full compatibility between the housing and filter by being mounted on the filter as well as provide resistance of the filter against vibration by means of the attachment and locking mechanism.

Another object of the present invention is to provide securing the filter on the respective housing by means of the grooves and ribs provided thereon and to protect the respective vehicle against potential problems resulting from vibration and lack of fully functioning of the filter.

Another object of the present invention is to make the filtering functions more common by broadening the utilization area of the filter.

Another object of the present invention is to increase user satisfaction and reduce costs by eliminating the requirement of using differentiated housings in order to ensure compatibility of the filters having similar filtering features with all types of vehicles.

In order to achieve the above objects, filters having different shapes/forms for each different type of vehicle, wherein it comprises the following in order to ensure the utilization of said filters independently from the shape/form thereof in the respective vehicle:
- a connection collar positioned between the housing and filter, and mounted on the respective filter by means of at least one rib and at least one groove comprised therein.

The rib disposed on said connection collar, in order to achieve the objects of the present invention, comprises a connection and securing projection being compatible with the geometrical structure of the filter housing and positioned with certain spacing.

The groove disposed on said connection collar, in order to achieve the objects of the present invention, comprises at least one connection and securing recess being compatible with the geometrical structure of the filter housing and positioned with certain spacing.

The structural and the characteristic features and all advantages of the present invention will be understood more clearly with the following figures and the detailed description written by referring to said figures, therefore, the evaluation needs to be done by taking said figures and the detailed description into consideration.

### Figures For Better Understanding Of The Invention

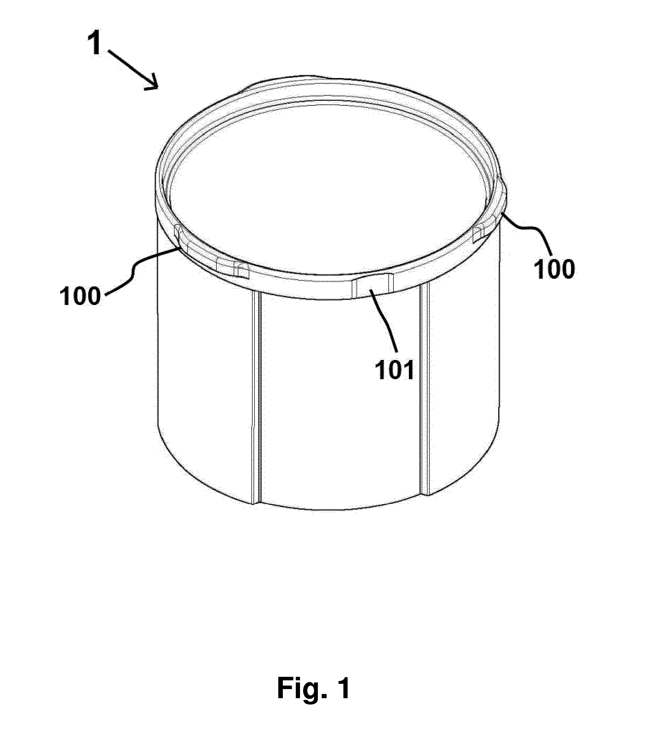

**Figure 1****:** A view of the connection collar according to the present invention suitable for the filters disposed in the internal combustion engines.

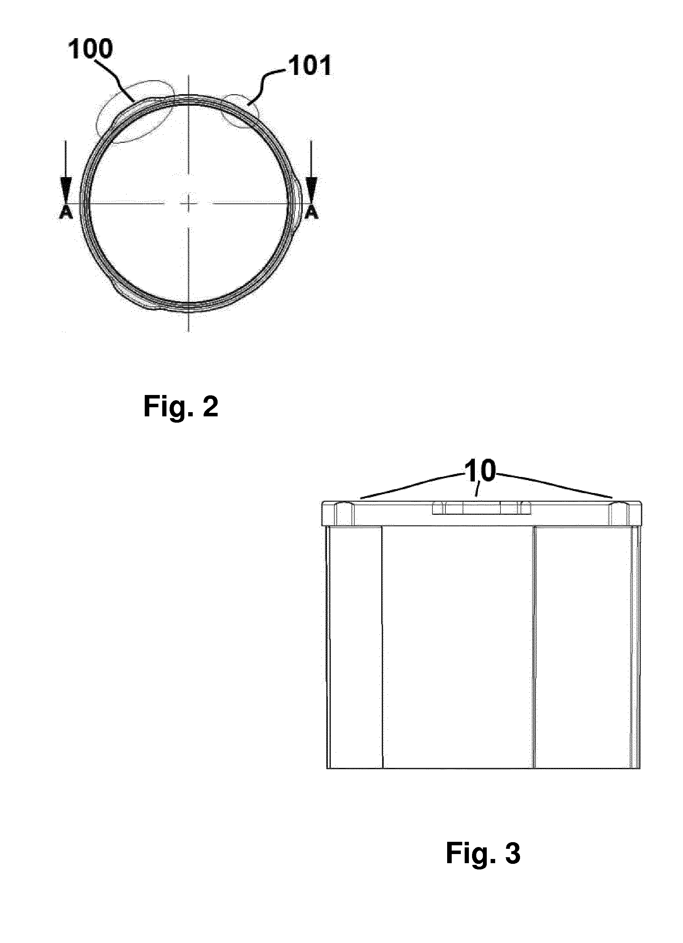

**Figure 2****:** A top view of the connection collar according to the present invention suitable for the filters disposed in the internal combustion engines.
**Figure 3****:** A side view of the connection collar according to the present invention suitable for the filters disposed in the internal combustion engines.

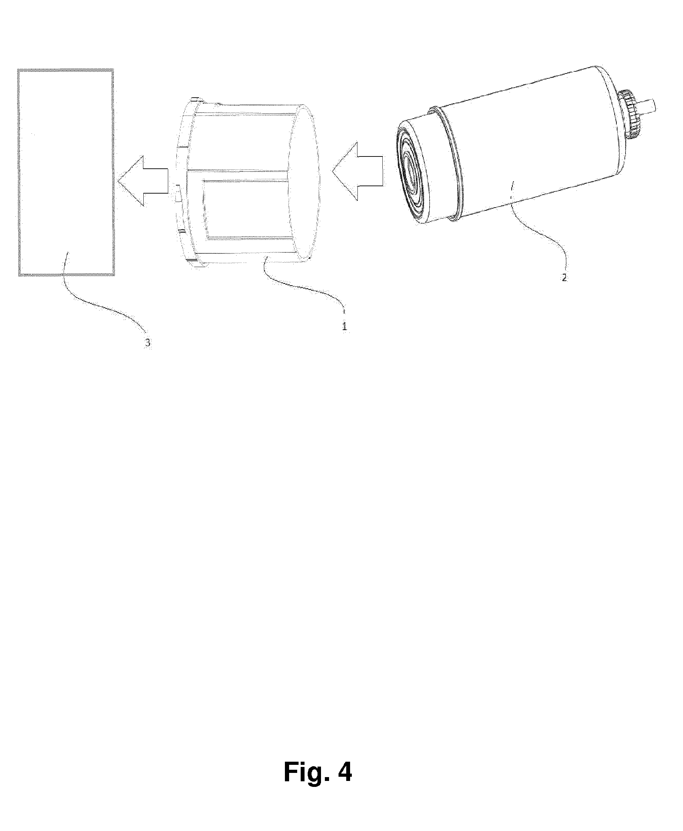

**Figure 4****:** A representational view of the filter, housing disposed in the internal combustion engines and connection collar according to the present invention.

Scaling of drawings is not absolutely required and details, which are not needed for understanding the present invention could have been neglected. Furthermore, elements, which are at least substantially identical or have at least substantially identical functions, are indicated with the same number.

### Description of Part References

**1.** Connection collar
   **10.** Locking mechanism
      **100.** Rib
      **101.** Groove
**2.** Any type of filter
**3.** Any type of filter housing

### Detailed Description of the Invention

In this detailed description, preferred embodiments of the connection collar (1) according to the present invention suitable for all types of filters is described only for a better understanding of the subject without constituting any restrictive effect.

The present invention relates to a connection collar (1) positioned between the housing and filter in order to ensure compatibility of the filters used in the current engines with the respective vehicles.

Different types of filters (2) having different shapes and forms used in the current internal combustion engines are provided with the utilization of said filters (2) independent from the shape/form thereof by providing a suitable engine-filter matching thanks to the connection collar (1) according to the present invention.

The connection collar (1) according to the present invention is characterized in that a full compatibility between the filter housing (3) and filter (2) is provided by mounting thereof on the filter (2) as well as resistance against vibration is provided by means of the attachment and locking mechanism (10).

Said connection collar (1) comprises a locking mechanism (10). Said locking mechanism (10) enables said collar (1) to be secured on the filter (2). Said mechanism (10), in the preferred embodiment of the present invention, comprises ribs (100) and grooves (101). The ribs (100) enable said collar (1) to be secured on the filter (2), while the grooves (101) assist them. Thus, said collar (1) firmly sits on the filter (2) and compresses said filter (2) and housing (3). This situation also prevents the collar (1) to rotate freely around the filter. In addition, said situation eliminates the drawbacks resulting from vibration as well as provides sealing function by enabling the filter (2) to be fully secured on the filter housing (3).

The ribs (100) and grooves (101) disposed on the connection collar (1) according to the present invention enable the filter to be secured and locked on the filter housing (3). On the filter housings (3) several geometrical structures can be provided for the full assembly of a filter on the housing (3). Said ribs (100) and grooves (101) can adapt to said geometrical structure.

In the preferred embodiment of the present invention, at least one rib (100) and at least one groove (101) are used.

## Claims

1. Filters (2) having different shapes/forms for each different type of vehicle, **characterized in** comprising the following in order to ensure the utilization of said filters (2) independently from the shape/form thereof in the respective vehicle:
- a connection collar (1) positioned between the housing (3) and filter (2); and mounted on said respective filter (2) by means of at least one rib (100) and at least one groove (101) comprised therein.

2. The filter (2) according to Claim 1, **characterized in that** the rib (100) disposed on said connection collar (1) comprises a connection and securing projection being compatible with the geometrical structure of the filter housing (3) and positioned with certain spacing.

3. The filter (2) according to Claim 1, **characterized in that** the groove (101) disposed on said connection collar (1) comprises at least one connection and securing recess being compatible with the geometrical structure of the filter housing (3) and positioned with certain spacing.
